(19) Europäisches Patentamt
European Patent Office
Office européen des brevets

(11) Publication number : 0 492 857 A1

(12) EUROPEAN PATENT APPLICATION

(21) Application number : 91311310.6

(22) Date of filing : 04.12.91

(51) Int. Cl.$^5$ : **B01D 17/04**, C12P 1/00

(30) Priority : 12.12.90 US 626656

(43) Date of publication of application : 01.07.92 Bulletin 92/27

(84) Designated Contracting States : AT BE CH ES FR GB IT LI NL

(71) Applicant : PETROLITE CORPORATION
369 Marshall Avenue
Saint Louis Missouri 63119 (US)

(72) Inventor : Holmes, Steven P.
4 Irene Court
St. Louis, Missouri 63131 (US)

(74) Representative : Seaborn, George Stephen et al
c/o Edward Evans & Co. Chancery House
53-64 Chancery Lane
London WC2A 1SD (GB)

# (54) Demulsifiers for resolution of pharmaceutical emulsions.

(57) A method for resolving emulsions produced in preparation of pharmaceuticals and other bioprocessing applications involving fermentation, such emulsions containing fermentation product including a pharmaceutical that is desired to be separated from the emulsion, is disclosed. The method comprises adding to such emulsion a demulsifying amount of (1) the reaction product formed by heating lower alkanolamines and a fatty composition selected from the group consisting of fatty oils, fatty acids and mixtures thereof in a fatty composition to lower alkanolamine acid equivalent to molar ratio of from about 1 :0.6 to about 1 :4 and at a temperature within the range of about 150°C to about 250°C, and (2) alkoxylated amines selected from the group consisting of ethoxylated amines having from two to about four amino groups, propoxylated amines having from two to about four amino groups and mixtures thereof. Compositions comprising the mixture of the reaction product and the alkoxylated amines are also disclosed.

EP 0 492 857 A1

## Background of the Invention:

### 1. Field of the Invention

The present invention relates to demulsification, and more particularly to resolution of emulsions formed during the preparation of pharmaceuticals and other bio-processing applications.

### 2. Description of the Prior Art

In a standard method for preparation of pharmaceuticals such as antibiotics, for example, penicillin or bioactive substances obtained from microorganisms such as bacteria, algae or fungi (streptomycin, erythromycin, efrotomycin, etc.), a culture of microorganisms or enzymes or both ferments a nutriment medium, such as vegetable oil in a water base, to produce a desired pharmaceutical. However, the fermented mass has been found to comprise not only the desired pharmaceutical, but also other organic fermentation products such as a biomass of microorganisms or enzymes, unconverted nutriment medium, water and surfactant. Thus, the desired pharmaceutical must be extracted from the undesirable components of the fermented mass.

The desired pharmaceutical is extracted first by adjusting the pH of the fermented mass, if required. Depending on the particular culture and desired pharmaceutical, the pH is adjusted either up or down, as necessary, by addition of a base or an acid, respectively, to precipitate or partition the desired pharmaceutical. Shortly before or after adjustment of the pH, an extracting solvent, typically an organic such as amyl acetate, methyl ethyl ketone, methyl isobutyl ketone, amyl alcohol, butyl alcohol, benzyl alcohol or the like, is added to extract the desired pharmaceutical from the water phase to the organic phase, and the phases are separated.

Often the water and solvent phases are commingled in the form of an emulsion, and so good separation can be difficult to achieve. Similar emulsions may also be encountered in other bioprocessing applications. It is believed that the organic phase typically is emulsified or dispersed in the water phase, although it is possible that the water phase is dispersed or emulsified through the organic phase or that actually an emulsion is dispersed or emulsified through another phase such as water.

Nevertheless, depending on the components, some emulsions eventually break by themselves, that is, such emulsions have only "temporary stability" and over time and with the aid of gravity or centrifugation the emulsion separates into distinct layers. However, more commonly, a demulsifier is added to encourage or initiate separation by gravity or centrifugation. Ordinarily, sodium chloride or another inorganic salt or an extracting agent, such as the products identified by the Petrolite Corp. trademarks DEMULSO 1 or 3, is employed as a demulsifier.

In any event, upon separation, a solvent phase and a water phase are formed. The solvent phase comprises the desired pharmaceutical, solvent and small amounts of water and other impurities, such as organic material, the structure of which may be similar to that of the desired pharmaceutical and other undesirable components dissolved in the solvent. The water phase comprises the remaining components, including the biomass of the microorganisms or enzymes, and there may be a small amount of the desired pharmaceutical dissolved in the water and contained in the biomass.

Clean water may be added to the solvent phase after separation from the water phase to clean the solvent phase further. By adjusting the pH of the mixture, the desired pharmaceutical sometimes can be shifted to either the water or the organic phase in order to simplify isolation of the pharmaceutical. The desired phase may be isolated by a second separation step. If the addition of water again forms an emulsion, separation may be accomplished as described for the first emulsion.

When the phase containing the desired pharmaceutical has been cleaned to the desired level, excess solvent or water, depending on the phase in which the pharmaceutical is held, can be evaporated off, or the pharmaceutical can be precipitated from the solution.

Conventional methods for demulsification and separation of phases have several drawbacks. For example, although inorganic salts such as sodium chloride are routinely used as demulsifiers, they do not perform as well as desired. Thus, the phase separation can take place more slowly than desired, and the separation tends to involve a relatively large, indistinct interface, with poor segregation of components into the separate phases. For example, a significant portion of the desired pharmaceutical is often entrapped within cells of the biomass. As a result, recovery of the pharmaceutical typically has been found to be as low as 80%.

Other demulsifiers have been used to resolve such emulsions, but are limited in that they resolve only certain of such emulsions. Moreover, although they resolve the phases more quickly, clearly and thoroughly than do the inorganic salts, even better and faster phase separation is desirable. Not only that, but some such emulsions tend to precipitate the solids in the fermentation broth (whether filtered or not) in such a way as to cause plugging in the centrifuge in which the broth is placed to encourage separation.

## Summary of the Invention

Briefly, therefore, the present invention is directed to a novel method for resolving emulsions produced in preparation of pharmaceuticals and other bioprocessing applications involving fermentation, such emulsions containing fermentation product including a pharmaceutical that is desired to be separated from the emulsion. The method comprises adding to such emulsion a demulsifying amount of a combination of (1) one part by weight of the reaction product formed by heating from about 0.6 to about 4 moles of lower alkanolamines per acid equivalent of a fatty oil, a fatty acid or a mixture thereof at a temperature within the range of about 150°C to about 250°C, and (2) from about 0.1 to about 10 parts by weight of ethoxylated or propoxylated amines having from two to about four amino groups or a mixture thereof.

The present invention is also directed to a novel demulsifier composition comprising the combination of reaction product and alkoxylated amine noted above.

Among the several advantages found to be achieved by the present invention, therefore, may be noted the provision of a demulsifier that resolves emulsions produced during the processing of fermentation products which resolves the emulsions more thoroughly than do the demulsifiers conventionally employed; the provision of such demulsifier that causes reduced or no precipitate that results in centrifuge plugging; the provision of a method for resolving emulsions produced during the processing of fermentation products which resolves the emulsions more thoroughly than do the demulsifiers conventionally employed; the provision of such method which produces a smaller and more defined interface than do the demulsifiers conventionally employed; the provision of such method that causes reduced or no precipitate and thereby results in reduced centrifuge plugging; and the provision of such method which demulsifies a variety of such emulsions.

## Description of the Preferred Embodiments

In accordance with the present invention, it has been discovered that a combination of the (1) reaction product formed by heating from about 0.6 to about 4 moles of lower alkanolamines per acid equivalent of a fatty oil, a fatty acid or a mixture thereof at a temperature within the range of about 150°C to about 250°C, and (2) from about 0.1 to about 10 parts by weight of ethoxylated or propoxylated amine of from two to about four amino groups, or a mixture of such amines, per part by weight of the reaction product is a surprisingly effective demulsifier for resolving emulsions produced in preparation of pharmaceuticals or in other such bioprocesses. The effectiveness of such demulsifiers is particularly surprising in view of the fact that each of the two components of the combination is often a less effective demulsifier when employed without the other. Employing the demulsifiers together, therefore, often results in synergistic demulsifying activity.

In addition, it has been found that such combination, while providing a significant, clear solvent phase, tends to disperse the solids in the aqueous phase or to settle the solids in a still somewhat fluid character, indicating that centrifuge plugging might be reduced or eliminated.

The component that is the reaction product prepared from the fatty acid or oil and lower alkanolamines (the product being sometimes referred to herein as Component 1) is known as a demulsifier for pharmaceutical emulsions and is described in U.S. patent 2,505,374 to Wirtel and Blair, Jr. The Wirtel and Blair, Jr. patent discusses a range of reaction products which have been recognized as effective demulsifiers, methods for preparation of the reaction product and methods for resolving emulsions formed during the extraction of penicillin by application of the reaction product to the emulsion.

As disclosed in the Wirtel and Blair, Jr. patent, the reaction product is formed by heating at a temperature within the range of about 150°C to about 250°C a fatty oil (or fatty acid) and triethanolamine in molar proportions of about 1:3. It has been found that the approximate molar ratio of the oil to triethanolamine can be varied significantly from the 1:3 ratio. For example, a fatty oil to triethanolamine molar ratio of about 1:7 (i.e., an acid equivalent to molar ratio of about 1:2.3, based on three equivalents of the fatty oil per equivalent of fatty acid) has been found to yield a product that produces synergistic effects when used in combination with the alkoxylated amines of this invention. The term "acid equivalent to molar ratio" is used herein to reflect the fact that fatty oils have three equivalents compared to one for fatty acids and refers to the ratio of the acid equivalents of the fatty compositions to the moles of lower alkanolamines. Accordingly, a fatty oil to triethanolamine molar ratio of 1:9 corresponds to an acid equivalent to molar ratio of 1:3.

Thus, while a molar ratio of "about 1:3" is noted by Wirtel and Blair, Jr., it is contemplated herein that molar ratios of from about 1:2 to about 1:10 (i.e., acid equivalents to molar ratios of from about 1:0.6 to about 1:4) are suitable. It also has been found that monoethanolamines, diethanolamines or a mixture of monoethanolamines, diethanolamines and triethanolamines may be used in place of triethanolamines. Likewise, mono-, di- and tri- propanolamines and other similar lower alkanolamines, such as N,N-bis(2-hydroxyethyl)-N-hydroxypropylamines are understood to be useful. Thus, as used herein, the term

"lower alkanolamines" refers to alkanolamines or a mixture of alkanolamines in which each alkanol group has up to about three carbon atoms. Ethanolamines, especially triethanolamine, are preferred. The triethanolamine may also be employed in a mixture, such as with, for example, 15% or more by weight diethanolamine. Likewise, those skilled in the art will recognize that such product may be prepared from monoethanolamine.

As noted in the Wirtel and Blair, Jr. patent, any of a number of fatty oils may be employed in the preparation of the demulsifier of that patent. For example, soybean oil, either refined or unrefined, has been found to be particularly suitable. Additionally, it should be understood that while Wirtel and Blair, Jr. refer to fatty oils, this invention also contemplates use of a mixture of fatty acids as may be found in refined natural oils as well as free fatty acids as may be found in unrefined natural oils.

Although the reaction is typically conducted without a catalyst, the use of catalyst, for example, iron, or catalytic amounts of Friedel-Crafts catalysts are not excluded from the scope of this invention.

It is believed that any of the demulsifier compositions encompassed by the Wirtel and Blair, Jr. patent, as qualified or clarified by the discussion above, would produce the newly discovered synergistic and other desired effects when employed in combination with the alkoxylated amines of this invention. It is also believed that the preferred embodiments and methods of preparation of the Wirtel and Blair, Jr. patent are useful, although the wider range of oil/acid to lower alkanolamine molar ratios noted above has been found to be useful, although oil/acid to lower alkanolamine acid equivalent to molar ratios of from about 1:2 to about 1:4, especially from about 1:2 to about 1:3, are believed to be particularly desirable. An example of a commercially available and useful oil/acid and ethanolamine reaction product is DEMULSO-1 demulsifier. DEMULSO-1 is a trademark of Petrolite Corporation.

The alkoxylated amines employed in this method (sometimes referred to herein as Component 2) may be prepared by polyoxyalkylating a fatty amine with ethylene oxide and/or propylene oxide by standard techniques. Preferred fatty amines have from about eight to about 22 carbon atoms in the fatty group and two to about four amino groups. A mixture of such amines may be used. Thus, appropriate amines may include diamines such as $C_{18}H_{35}NH(CH_2)_3NH_2$, triamines such as $C_{18}H_{35}NH(CH_2)_3(NH)(CH_2)_3NH_2$ or other such amines of up to about 4 nitrogen atoms or mixtures thereof, for example, tallow diamines or triamines, etc. It is desired, therefore, that the amine be of the formula:

$$RNH[(CH_2)_yNH]_zH,$$

wherein y is an integer of from 2 to 6, preferably 2 or 3, most preferably 3, z is 1, 2 or 3 and R is a fatty group (saturated or unsaturated) from about 8 to about 22 carbon atoms.

Thus, the alkoxylated amine may be produced by heating a suitable amine in a reactor vessel to a temperature in the range of from about 80°C to about 150°C, and then metering in alkylene oxide, preferably either ethylene or propylene oxide, slowly for incremental addition. The reactor should be a pressure vessel so that upon the addition of the alkylene oxide, the pressure is about 5 to about 100 psi. From about 1 to about 10, preferably from about 2 to about 5, moles of the alkylene oxide are added per mole of amine.

The end point may be set at the point of desired degree of polyoxyalkylation and will be apparent to those skilled in the art.

The use of the catalyst is optional. When a catalyst is employed, about 0.1% by weight to about 2% by weight of the catalyst can be used. Examples are sodium hydroxide, potassium hydroxide or $BF_3$.

Accordingly, the alkoxylated polyamines suitable for use in the present technique are ethoxylated amines and propoxylated amines having from two to about four amino groups, from about eight to about 22 carbon atoms in the fatty group and from 1 to about 10 ethoxy or propoxy groups, and mixtures thereof. More particularly, preferred alkoxylated amines are of the formula:

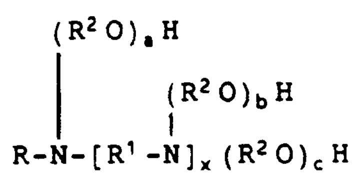

wherein R is a fatty $C_8$-$C_{22}$ group, $R^1$ is an alkylene of from two to about six carbons, preferably ethylene or propylene, each $R^2$ is independently selected from among ethylene and propylene, x is an integer from 1 to about 3, and a, b and c are each integers independently selected from 0 to about 4, the sum of $a+(b\cdot x)+c$ being from 1 to about 10. Preferably the sum of $a+(b\cdot x)+c$ is from about 2 to about 5 and the average of the sum of $a+(b\cdot x)+c$ in a mixture of such alkoxylated amines is likewise from about 2 to about 5. It is also preferred that each $R^2$ be ethylene and that R be a fatty $C_{14}$-$C_{18}$ group, especially a fatty $C_{16}$-$C_{18}$. This group may be saturated or unsaturated. Because each $R^2$ is independently selected, the shorthand designations $-(R^2O)_aH$, $-(R^2O)_bH$, and $(R^2O)_cH$ do not refer solely to repetitive chains when a, b or c is two or more. For example, $-(R^2O)_2H$ may

refer to $-CH_2CH_2OCH_2CH_2CH_2OH$ (i.e., -EtOPrOH) or $-CH_2CH_2CH_2OCH_2CH_2OH$ (i.e., -PrOEtOH) as well as -EtOEtOH or -PrOPrOH.

Synergistic effects have been noted for a broad range of relative proportions of the demulsifier components. More specifically, Component 1:Component 2 weight proportions of from about 1:10 to about 10:1 yield superior results, although weight ratios in the range of from about 75:25 to about 25:75, especially about 50:50, are preferred.

The combination of Components 1 and 2 has been found to be surprisingly effective in resolving emulsions produced in preparation of certain pharmaceuticals such as antibiotics, for example, penicillin or bioactive substances obtained from bacteria (streptomycin, erythromycin, efrotomycin and so forth), by fermentation. In fact, in many cases, such combinations of demulsifiers have been found to behave together synergistically to produce more effective demulsification that does either of the component demulsifiers individually.

The emulsions to which the demulsifiers of this invention (that is, the combination of Components 1 and 2) are applicable are those formed during preparation of pharmaceuticals such as antibiotics, for example, penicillin or bioactive substances obtained from bacteria (streptomycin, erythromycin, efrotomycin, etc.), in which a culture of bacteria or enzymes ferments a nutrient medium, such as vegetable oil in a water base, to produce a desired pharmaceutical. The emulsion comprises an organic solvent, typically methyl isobutyl ketone, amyl acetate or butyl acetate, emulsifiers, nutrient from the medium, particulate matter, including enzymes or bacteria, and various electrolytes. Such emulsions are produced in a broad range of pH's and the components are present in a variety of relative proportions.

To resolve such emulsions, the two types of demulsifiers, Components 1 and 2, are applied to the emulsion by addition of an effective amount, generally a combined amount corresponding to from about 100 parts by weight to about 10,000 parts by weight of the combination of demulsifiers to one million parts by weight of the emulsion. In any particular case, the desired concentration depends on the nature of the emulsion, with the greater concentrations being necessary for unfiltered broths. If desired, the demulsifier may be mixed into the emulsion by shaking or stirring.

Components 1 and 2 may be mixed or blended together to form a single composition for addition to the emulsion. Alternatively, Components 1 and 2 may be added to the emulsion as separate compositions. The composition(s) may be incorporated into the emulsion according to standard techniques as employed with conventional demulsifiers. The composition(s) may be added, for example, directly into the centrifuge or the pre-centrifuge mixing tank used in the bioprocess.

It has been found that upon addition of an effective amount of the demulsifier combination, the emulsion separates almost immediately into a clear solvent phase, an aqueous phase and a small interface. Moreover, the solids in the system tend either to disperse in the aqueous phase or, if an agglomeration of the solids forms, to be of significant fluidity such that plugging of the centrifuge is avoided or decreased significantly.

Moreover, it has been found that whereas at relatively low doses Component 1 tends to exhibit superior effectiveness compared to Component 2, and at relatively high doses Component 2 tends to exhibit superior effectiveness compared to Component 1, the combination tends to be effective at a broad range of doses. At any particular dose, the more effective component often seems to automatically predominate. This is so even though it is employed at a reduced concentration. In other words, where Component 1 is effective at 400 ppm, in many cases a 50:50 combination at 400 ppm has been found to be effective even though the concentration of Component 1 in such case is only 200 ppm. Thus, instead of selecting various demulsifiers for various situations, the single demulsifier combination may be used over broad ranges.

Moreover, it has been found that while demulsifiers such as Component 2 tend to cause precipitate formation that tends to clog the centrifuge, blending it with Component 1 tends to disperse the precipitate in the aqueous phase, thereby reducing or eliminating such plugging. Yet, the effectiveness of Component 2 as a demulsifier in such cases has not been found to suffer significantly, even though its dosage may be decreased in favor of inclusion of Component 1 in the combination.

The following examples describe certain preferred embodiments of the invention. Other embodiments within the scope of the claims herein will be apparent to one skilled in the art from consideration of the specification or practice of the invention as disclosed herein. It is intended that the specification, together with the examples, be considered exemplary only, with the scope and spirit of the invention being indicated by the claims which follow the examples. In the examples all percentages and ppm are given on a weight basis unless otherwise indicated.

## EXAMPLE 1

Broth (1000 ml) from filtrate samples produced in the manufacture of penicillin G was placed in a 2000 ml glass beaker and continuously mixed using a magnetic stirrer. The broth was adjusted to pH 2.65 using 6N

sulfuric acid ($H_2SO_4$). Pure butyl acetate (500 ml) was added to the broth and mixed with a magnetic stirrer at 800 rpm for 10 minutes.

All demulsifiers were screened at levels between 200 and 5,000 ppm based on the volume of emulsion (50 ml) by adding the neat product to 50 ml of acidified broth/solvent emulsion in a plastic screwcap centrifuge tube. The demulsifiers were mixed into the emulsion by shaking the centrifuge tubes 50 times by hand.

The centrifuge tubes were then placed in a laboratory centrifuge for 1 minute 48 seconds at 2,000 rpm (these times and speeds were found to correspond approximately with plant centrifuge times and speeds). A reaction product having a soybean oil:triethanolamine molar ratio of about 1:7 and made at a reaction temperature of about 250°C (referred to in this and the following examples as demulsifier (I)) was used as the standard in all the tests.

Demulsifier results were reported as milliliters of separated solvent, interface, aqueous phase and precipitated solids, compared to a blank in which no demulsifier was added, and demulsifier (I). The results are presented in the following table. The maximum amount of solvent theoretically recoverable is approximately 17 to 18 ml from 50 ml of emulsion. In tests indicating 20 ml of solvent, this was due to inadequate mixing and premature separation of solvent. In the following table and the tables in the following examples, Demulsifier (1) is as described above, demulsifiers A and B refer to ethoxylated tallow diamines derived from diamines of the formula $R\text{-}NH\text{-}CH_2CH_2CH_2\text{-}NH_2$ wherein R is tallow and the ratios of moles of ethylene oxide to moles of amine are 3 and 5 respectively, as shown in the following table.

Ethoxylated $R\text{-}NH\text{-}CH_2CH_2CH_2\text{-}NH_2$; R=tallow

| Demulsifier | Ethylene Oxide:Amine Molar Ratio |
|---|---|
| A | 3 |
| B | 5 |

Reference to a combination of demulsifier (I), and an ethoxylated amine demulsifier, indicates a 50:50 mixture based on volume. These mixtures, namely, (I)+A and (I)+B are the compositions within the scope of the invention.

In such trials, high solvent volume, low interface volume and low solids volume generally are preferred.

| Run No. | Demulsifier | Dose(ppm) | Volume (ml) Solvent | Interface | Aqueous | Solids |
|---|---|---|---|---|---|---|
| 1 | A | 200 | 5 | 16 | 28 | 1 |
| 2 | B | 200 | 1 | 20 | 28 | 1 |
| 3 | (I)+B | 200 | 18 | 1 | 30 | 1 |
| 4 | (I)+A | 200 | 18 | 1 | 30 | 1 |
| 5 | (I) | 200 | 15 | 2 | 32 | 1 |
| 6 | Control | 0 | 0 | 18 | 31 | 1 |
| 7 | A | 300 | 2 | 18 | 28 | 2 |
| 8 | B | 300 | 2 | 17 | 29 | 2 |
| 9 | (I)+B | 300 | 18 | 2 | 28 | 2 |
| 10 | (I)+A | 300 | 18 | 2 | 28 | 2 |
| 11 | (I) | 300 | 13 | 3 | 32 | 2 |
| 12 | Control | 0 | 0 | 16 | 32 | 2 |
| 13 | A | 400 | 14 | 2 | 32 | 2 |
| 14 | B | 400 | 17 | 0.5 | 30 | 2.5 |
| 15 | (I)+B | 400 | 17 | 1 | 30 | 2 |
| 16 | (I)+A | 400 | 17 | 1 | 30 | 2 |
| 17 | (I) | 400 | 11 | 4 | 33 | 2 |
| 18 | Control | 0 | 0 | 18 | 30 | 2 |
| 19 | A | 500 | 17 | 1 | 30 | 2 |
| 20 | B | 500 | 18 | 0.5 | 29 | 2.5 |
| 21 | (I)+B | 500 | 18 | 0.5 | 29 | 2.5 |
| 22 | (I)+A | 500 | 18 | 1 | 29 | 2 |
| 23 | (I) | 500 | 17 | 0.5 | 29.5 | 2 |
| 24 | Control | 0 | 0 | 18 | 31 | 1 |
| 25 | A | 1000 | 18 | 0.5 | 29 | 2.5 |
| 26 | B | 1000 | 20 | 0.5 | 27 | 2.5 |
| 27 | (I)+B | 1000 | 20 | 0.5 | 27 | 2.5 |
| 28 | (I)+A | 1000 | 20 | 0.5 | 27 | 2.5 |
| 29 | (I) | 1000 | 16 | 1 | 31 | 2 |
| 30 | Control | 0 | 0 | 18 | 30 | 2 |
| 31 | A | 5000 | 16 | 2 | 30 | 2 |
| 32 | B | 5000 | 17 | 0.5 | 30 | 2.5 |
| 33 | (I)+B | 5000 | 17 | 3 | 27.5 | 2.5 |
| 34 | (I)+A | 5000 | 17 | 3 | 28 | 2 |
| 35 | (I) | 5000 | 7 | 8 | 33 | 2 |
| 36 | Control | 0 | 0 | 17 | 31 | 2 |

(Continued)

| Run No. | Demulsifier | Dose(ppm) | Volume (ml) | | | |
|---|---|---|---|---|---|---|
| | | | Solvent | Interface | Aqueous | Solids |
| 37 | A | 250 | 2 | 17 | 30 | 1 |
| 38 | B | 200 | 0 | 19 | 30 | 1 |
| 39 | (I)+B | 200 | 8 | 11 | 30 | 1 |
| 40 | (I)+A | 200 | 14 | 6 | 29 | 1 |
| 41 | (I) | 200 | 7 | 11 | 31 | 1 |
| 42 | Control | 0 | 0 | 18 | 31 | 1 |
| 43 | A | 375 | 16 | 2 | 31 | 1 |
| 44 | B | 300 | 17 | 3 | 28 | 2 |
| 45 | (I)+B | 300 | 18 | 2 | 29 | 1 |
| 46 | (I)+A | 300 | 18 | 2 | 29 | 1 |
| 47 | (I) | 300 | 14 | 3 | 32 | 1 |
| 48 | Control | 0 | 0 | 18 | 31 | 1 |
| 49 | A | 500 | 17 | 1 | 31 | 1 |
| 50 | B | 400 | 17 | 1 | 30 | 2 |
| 51 | (I)+B | 400 | 17 | 1 | 31 | 1 |
| 52 | (I)+A | 400 | 17 | 1 | 31 | 1 |
| 53 | (I) | 400 | 15 | 2 | 32 | 1 |
| 54 | Control | 0 | 0 | 17 | 32 | 1 |
| 55 | A | 1250 | 17 | 0.5 | 31.5 | 1 |
| 56 | B | 1000 | 18 | 0.5 | 30.5 | 1 |
| 57 | (I)+B | 1000 | 18 | 0.5 | 30.5 | 1 |
| 58 | (I)+A | 1000 | 17 | 1 | 31 | 1 |
| 59 | (I) | 1000 | 17 | 1 | 31 | 1 |
| 60 | Control | 0 | 0 | 18 | 31 | 1 |
| 61 | A | 6250 | 15 | 3 | 31 | 1 |
| 62 | B | 5000 | 16 | 4 | 29 | 1 |
| 63 | (I)+B | 5000 | 15 | 4 | 30 | 1 |
| 64 | (I)+A | 5000 | 16 | 2 | 31 | 1 |
| 65 | (I) | 5000 | 15 | 2 | 32 | 1 |
| 66 | Control | 0 | 0 | 18 | 31 | 1 |

## EXAMPLE 2

Procedures similar to that described in Example 1 were followed on a whole broth sample of a second type of penicillin broth. Because the tests were conducted on a whole broth, the solvent concentrations were higher. The results are set forth in the table below, which shows that superior solvent phase separation did not occur for any of the tested demulsifiers until 2000 ppm. At that concentration, the combination of demulsifier (I) and demulsifier A was found to be as effective as demulsifier A alone (which in turn was more effective on the tested broth than demulsifier (I) at that concentration), even though the concentration of demulsifier A in the combination was only 1000 ppm. The demulsifier designations are as explained in Example 1, above. The maximum amount of solvent theoretically recoverable was 30 ml.

| Demulsifier | Dose(ppm) | Volume (ml) Solvent | Interface | Aqueous | Solids |
|---|---|---|---|---|---|
| | 0 | 6 | 37 | 6 | 1 |
| (I) | 500 | 8 | 31 | 10 | 1 |
| A | 500 | 0 | 38 | 11 | 1 |
| (I)+A | 500 | 3 | 35 | 11 | 1 |
| (I) | 1000 | 15 | 21 | 13 | 1 |
| A | 1000 | 1 | 36 | 12 | 1 |
| (I)+A | 1000 | 3 | 35 | 11 | 1 |
| (I) | 1500 | 20 | 16 | 13 | 1 |
| A | 1500 | 5 | 33 | 11 | 1 |
| (I)+A | 1500 | 5 | 32 | 12 | 1 |
| (I) | 2000 | 20 | 16 | 13 | 1 |
| A | 2000 | 26 | 8 | 15 | 1 |
| (I)+A | 2000 | 26 | 9 | 14 | 1 |

## EXAMPLE 3

Procedures similar to that described in Example 1 were followed on a filtered broth sample of a third type of penicillin broth. The demulsifier designations are as explained in Example 1, above. The maximum amount of solvent theoretically recoverable was 10.5 ml.

| Demulsifier | Dose(ppm) | Volume (ml) Solvent | Interface | Aqueous | Solids |
|---|---|---|---|---|---|
| | 0 | 0 | 12 | 38 | |
| (I) | 200 | 11 | 1 | 38 | |
| A | 200 | 8 | 4 | 38 | |
| (I)+A | 200 | 11 | 0 | 39 | |
| (I) | 400 | 11 | 1 | 38 | |
| A | 400 | 11 | 0 | 39 | |
| (I)+A | 400 | 11 | 0 | 39 | |
| (I) | 600 | 10 | 1 | 39 | |
| A | 600 | 11 | 0 | 39 | |
| (I)+A | 600 | 11 | 0 | 39 | |

## EXAMPLE 4

Procedures similar to that described in Example 1 were followed on a whole broth sample of a type of penicillin broth as employed in Example 2, above -- one containing penicillin V. Because the tests were conducted on a whole broth, the solvent concentrations were higher. The results are set forth in the table below, which shows that superior solvent phase separation did not occur for any of the tested demulsifiers until 2000 ppm. At that concentration, the combination of demulsifier (I) and demulsifier A was found to be as effective as demulsifier A alone (which in turn was more effective on the tested . broth than demulsifier (I) at that concentration), even though the concentration of demulsifier A in the combination was only 1000 ppm. The demulsifier designations are as explained in Example 1, above. The maximum amount of solvent theoretically recoverable was 30 ml.

| | | Volume (ml) | | | |
|---|---|---|---|---|---|
| Demulsifier | Dose(ppm) | Solvent | Interface | Aqueous | Solids |
| | 0 | 5 | 35 | 9 | 1 |
| (I) | 1500 | 14 | 24 | 11 | 1 |
| A | 1500 | 8 | 34 | 7 | 1 |
| (I)+A | 1500 | Trace | 40 | 9 | 1 |
| (I) | 2000 | 15 | 23 | 12 | 1 |
| A | 2000 | 27 | 10 | 11 | 2 |
| (I)+A | 2000 | 27 | 8 | 14 | 1 |

In view of the above, it will be seen that the several advantages of the invention are achieved and other advantageous results attained.

As various changes could be made in the above methods and compositions without departing from the scope of the invention, it is intended that all matter contained in the above description shall be interpreted as illustrative and not in a limiting sense.

## Claims

1. A method for resolving emulsions produced in preparation of pharmaceuticals and other bioprocessing applications involving fermentation, such emulsions containing fermentation product including a pharmaceutical that is desired to be separated from the emulsion, the method comprising adding to such emulsion a demulsifying amount of (1) the reaction product formed by heating lower alkanolamines and a fatty composition selected from the group consisting of fatty oils, fatty acids and mixtures thereof in a fatty composition to lower alkanolamine acid equivalent to molar ratio of from about 1:0.6 to about 1:4 and at a temperature within the range of about 150°C to about 250°C, and (2) alkoxylated amines selected from the group consisting of ethoxylated amines having from two to about four amino groups, propoxylated amines having from two to about four amino groups and mixtures thereof, in a reaction product to alkoxylated amine weight ratio of from about 10:1 to about 1:10.

2. A method as set forth in claim 1 wherein the alkoxylated amines are of the formula:

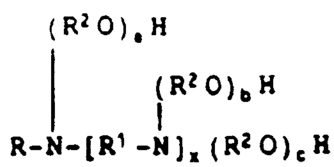

wherein R is a fatty $C_8$-$C_{22}$ group, $R^1$ is an alkylene group of from about two to about six carbon atoms, each $R^2$ is independently selected from among ethylene and propylene, x is an integer from 1 to about 3, and a, b and c are integers independently selected from 0 to about 4, the sum of a+(b·x)+c being from 1 to about 10.

3. A method as set forth in claim 2 wherein R is a fatty $C_{14}$-$C_{18}$ group.

4. A method as set forth in claim 2 wherein $R^1$ is ethylene or propylene.

5. A method as set forth in claim 2 wherein $R^1$ is propylene and $R^2$, $R^3$ and $R^4$ are ethylene.

6. A method as set forth in claim 5 wherein the sum of a+(b·x)+c is from about 2 to about 5.

7. A method as set forth in claim 6 wherein R is a fatty $C_{14}$-$C_{18}$ group and x is 1.

8. A method as set forth in any preceding claim wherein the lower alkanolamines are selected from the group consisting of monoethanolamine, diethanolamine, triethanolamine, and mixtures thereof.

9. A method as set forth in any preceding claim wherein the combined weight of the reaction product and the alkoxylated amines makes up about 100, to about 10,000 parts per million by weight of the emulsion.

10. A demulsification mixture useful for resolving emulsions produced in preparation of pharmaceuticals and other bioprocessing applications involving fermentation, such emulsions containing fermentation product including a pharmaceutical that is desired to be separated from the emulsion, the mixture comprising (1) the reaction product formed by heating lower alkanolamines and a fatty composition selected from the group consisting of fatty oils, fatty acids and mixtures thereof in a fatty composition to lower alkanolamine acid equivalent to molar ratio of from about 1:0.6 to about 1:4 and at a temperature within the range of about 150°C to about 250°C, and (2) from about 0.1 to about 10 parts by weight of alkoxylated amines selected from the group consisting of ethoxylated amines having from two to about four amino groups, propoxylated amines having from two to about four amino groups and mixtures thereof.

11. A demulsifier mixture as set forth in Claim 10 wherein the alkoxylated amines are present in a concentration of from about one-third part by weight to about three parts by weight per one part by weight of the reaction product.

12. A demulsifier mixture as set forth in Claim 11 wherein the alkoxylated amines and the reaction product are present in about equal weight proportions.

13. A demulsifier mixture as set forth in Claim 11 wherein the alkoxylated amines are of the formula:

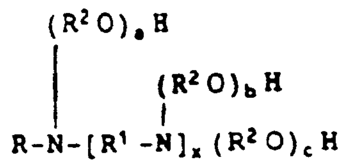

wherein R is a fatty $C_8$-$C_{22}$ group, $R^1$ is an alkylene group of from about two to about six carbon atoms, each $R^2$ is independently selected from among ethylene and propylene, x is an integer from 1 to about 3, and a, b and c are integers independently selected from 0 to about 4, the sum of a+(b·x)+c being from 1 to about 10.

European Patent Office

# EUROPEAN SEARCH REPORT

Application Number

EP 91 31 1310

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-2 505 374 (A.F WIRTEL)<br>* claims 1,2 * | 1,8,10 | B01D17/04<br>C12P1/00 |
| A | EP-A-0 055 200 (ETABLISSEMENTS SOMALOR-FERRARI)<br>* page 4, line 20 - page 5, line 14 * | 1-7,10,13 | |
| A | WORLD PATENTS INDEX LATEST<br>Week 8141,<br>Derwent Publications Ltd., London, GB;<br>AN 81-73828D<br>& DD-A-149 539 (KEILICH D) 15 July 1981<br>* abstract * | 1,8,10,11 | |
| P,A | EP-A-0 404 370 (PETROLITE CORPORATION)<br>* page 5, line 13 - line 31 *<br>* claim 1 * | 1-7,10 | |
| A | EP-A-0 392 697 (PETROLITE CORPORATION)<br>* page 4, line 39 - page 5, line 12 * | 1,8,10 | |
| | ----- | | TECHNICAL FIELDS SEARCHED (Int. Cl.5)<br>B01D<br>C12P |

The present search report has been drawn up for all claims

| Place of search | Date of completion of the search | Examiner |
|---|---|---|
| THE HAGUE | 22 APRIL 1992 | HILGENGA K.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)